## Europäisches Patentamt

## European Patent Office

## Office européen des brevets

(11) **EP 1 174 186 A2**

(12) **EUROPÄISCHE PATENTANMELDUNG**

(43) Veröffentlichungstag:
23.01.2002 Patentblatt 2002/04

(51) Int Cl.$^7$: **B01J 19/00**, B01J 37/00

(21) Anmeldenummer: 01250270.4

(22) Anmeldetag: **19.07.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **20.07.2000 DE 10037166**

(71) Anmelder: **Institut für Angewandte Chemie Berlin-Adlershof E.V.**
**12489 Berlin (DE)**

(72) Erfinder:
• **Wolf, Dorit, Dr.**
**12557 Berlin (DE)**
• **Gerlach, Olga, Dr.**
**67071 Ludwigshafen (DE)**
• **Baerns, Manfred, Prof. Dr.**
**14195 Berlin (DE)**

(74) Vertreter: **Walter, Wolf-Jürgen et al**
**Patentanwälte Felke & Walter**
**Normannenstrasse 1-2**
**10367 Berlin (DE)**

(54) **Verfahren zur Herstellung und Auswahl neuer Katalysatoren nach einem evolutionären Verfahren**

(57) Die Erfindung betrifft ein Verfahren, mit dem die verbesserte Herstellung von Katalysatoren nach einem evolutionären Verfahren ermöglicht wird. Die dabei angewendeten Prinzipien der Mutation und Kreuzung von Katalysatorkomponenten und der Bestimmungvon Leistungsparametern der Mischkatalysatoren werden in 5 bis 50 Katalysatorgenerationen in der Weise durchgeführt, daß bei der Kreuzung zwei Mischkatalysatoren aus der gleichen Generation ausgewählt werden und wenigstens eine ausgewählte Komponente zwischen beiden ausgetauscht wird, und bei der Mutation von einem ausgewählten Mischkatalysator aus einem Katalysatorgemisch eine ausgewählte Komponente in den Katalysator eingeführt oder, falls darin bereits vorhanden, dem Katalysator entzogen wird. Die Auswahl erfolgt in allen Fällen mittels Zufallsgeneratoren mit Gleichverteilung. In gleicher Weise wird bei den Leistungsparametern Gasstromzusammensetzung, Temperatur und Raumgeschwindigkeit verfahren.

EP 1 174 186 A2

**Beschreibung**

Die Erfindung betrifft ein Verfahren, mit dem die verbesserte Herstellung und Auswahl von Katalysatoren nach einem evolutionären Verfahren ermöglicht wird.

In der DE 198 43 242.9 ist ein Verfahren zur Herstellung aktiver und/oder selektiver Feststoff-Katalysatoren aus anorganischen und metallorganischen Feststoffen oder Gemischen davon beschrieben, bei dem bei der evolutionären Such- und Optimiermethode zunächst potentiell katalytisch aktive Einzelkomponenten festgelegt werden, durch deren randomisierte qualitative und quantitative Verknüpfung zu zahlreichen Materialien eine erste Generation von Mischmaterialien erzeugt wird, die dann einer katalytischen Prüfung unterzogen werden. Weiterhin wurde beschrieben, dass zur Erzeugung einer neuen Generation nach Prinzipien der Mutation und der Kreuzung die besten Materialien der ersten Generation ausgewählt werden. Diese Verfahrensweise wurde dann weiter für alle nachfolgenden Generationen angewandt. Es hat sich jedoch gezeigt, dass diese Vorgehensweise zwar zu Katalysatoren führt, die katalytisch aktive Komponenten enthalten, dass jedoch andere ursprüngliche Komponenten aus dem weiteren Auswahlprozess bereits in der ersten oder den nachfolgenden Generationen ausgeschieden werden, obwohl sie für den optimalen Katalysator erforderlich sein können.

Der Erfindung liegt die Aufgabe zugrunde, die evolutionäre Auswahlstrategie weiter zu verbessern und dabei Katalysatorkomponenten und Leistungsparameter miteinzubeziehen.

Erfindungsgemäß wird der Bereich der zur Verfügung stehenden Katalysatorkomponenten bei der einengenden evolutionären Auswahl breiter gehalten, um beim Fortschreiten von der ersten "randomisierten" Stufe zu den folgenden, auf der Grundlage einer evolutionären Auswahlstrategie erzeugten Generationen nicht einen Teil der ursprünglichen Komponenten bereits nach einer oder wenigen nachfolgenden Generationen zu verlieren. Diese Methode führt so zu einer höheren Zielgenauigkeit des Auswahlprozesses.

Dazu ist es erforderlich, einerseits die Mischmaterialien, die eine gute katalytische Leistungsfähigkeit aufweisen, in den nachfolgenden Generationen verstärkt vertreten zu haben, aber gleichzeitig auch die zunächst nicht herausragenden Mischmaterialien, deren Einzelkomponenten jedoch in anderen Kombinationen durchaus nützlich sein könnten, zu behalten, um ihre möglicherweise positive Wirksamkeit in nachfolgenden Generationen zu überprüfen. Erst wenn sich im evolutionären Optimierprozess herausstellt, dass diese Einzelkomponenten nicht zu einer Verbesserung der katalytischen Materialien beitragen, werden sie während des weiten Evolutionsprozesses ausgeschlossen.

Anstelle von Einzelkomponenten können im Falle einer beabsichtigen Katalysatorverbesserung in die erste und die nachfolgenden Generationen auch bereits bekannte Katalysatorzusammensetzungen als Pseudokomponente eingebracht werden.

Erfindungsgemäß ist daher das Verfahren zur Herstellung von aktiven heterogenen Katalysatoren anorganischer Natur durch Auswahl unterschiedlich zusammengesetzter Feststoffmaterialien und Neustrukturierung der ursprünglichen Katalysatoren und nachfolgender Katalysatorgenerationen mittels stochastischer Verfahren sowie Bestimmung der Leistungsparameter der jeweiligen Katalysatorgeneration und Auswahl der Mischkatalysatoren einer oder mehrerer Katalysatorgenerationen dadurch gekennzeichnet,
dass die Neustrukturierung, wenn sie denn auf dem Prinzip der Kreuzung basiert, in der Weise erfolgt, dass ein Mischkatalysator willkürlich mittels eines numerischen Zufallsgenerators mit Gleichverteilung (zum Beispiel mittels des Programm-Codes G05DYF der NAG Library [NAG FORTRAN Workstation Library, NAG Group Ltd., 1986]) aus einer Generation von Katalysatoren ausgewählt wird und ein zweiter Mischkatalysator aus der selben Generation mit einer Wahrscheinlichkeit W mittels numerischer Zufallsgeneratoren mit Gleichverteilung (zum Beispiel mittels Kombination der Programm-Codes G05DYF und G05DZF der NAG Library [NAG FORTRAN Workstation Library, NAG Group Ltd., 1986]) ausgewählt wird, wobei durch $W_i$ die Vorschrift

$$W_i = \frac{\left(\sum_{j=1}^{n} j\right) - i}{\left(\sum_{j=1}^{n} j\right)}$$

bestimmt ist, $i$ bzw. $j$ die Rangfolge der nach ihrer abnehmenden katalytischen Leistung geordneten Katalysatoren einer Generation bezeichnen und n die Anzahl von Katalysatoren in einer Generation ist,
und anschließend aus den beiden zu kreuzenden Mischkatalysatoren mindestens eine Einzelkomponente, die nur in einem der beiden Katalysatoren enthalten ist, nach dem Zufallsprinzip mittels eines numerischen Zufallsgenerators mit Gleichverteilung (zum Beispiel mittels des Programm-Codes G05DYF der NAG Library [NAG FORTRAN Workstation Library, NAG Group Ltd., 1986]) ausgewählt wird und zwei neue Katalysatorzusammensetzungen der nächsten Generation so festgelegt werden, dass die ausgewählte Komponente nun dem Katalysator zugefügt wird, der diese Komponente in der vorangegangenen Generation nicht enthielt, während die Komponente in dem Katalysator, der diese ursprünglich enthielt, weggelassen wird,

und

dass die Neustrukturierung eines Katalysators der nächsten Generation, wenn sie denn auf dem Prinzip der Mutation basiert, in der Weise erfolgt,

dass zunächst ein Mischkatalysator willkürlich mittels eines numerischen Zufallsgenerators mit Gleichverteilung (zum Beispiel mittels des Programm-Codes G05DYF der NAG Library [NAG FORTRAN Workstation Library, NAG Group Ltd., 1986]) aus einer Katalysatorgeneration ausgewählt wird, dann nach dem Zufallsprinzip mittels eines numerischen Zufallsgenerators mit Gleichverteilung (zum Beispiel mittels des Programm-Codes G05DYF der NAG Library [NAG FORTRAN Workstation Library, NAG Group Ltd., 1986]) eine Einzelkomponente ausgewählt wird und diese, wenn sie in dem Mischkatalysator bereits enthalten ist, herausgenommen wird oder, wenn sie bislang nicht in diesem Katalysator enthalten war, hinzugefügt wird.

Diese Art der Kreuzung und Mutation wird solange durchgeführt, bis die dabei hergestellten Mischkatalysatoren innerhalb einer Generation keine deutliche Verbesserung mehr zeigen. Auf diese Weise ist es möglich, Einzelkomponenten länger am Prozeß der Auswahl und Austestung der Eigenschaften der neu strukturierten Mischmaterialien teilhaben zu lassen und erst dann auszuscheiden, wenn klar keine Eigenschaftsverbesserungen in Bezug auf die katalytische Aktivität und/oder Selektivität bei den entsprechenden Mischkatalysatoren mehr erkennbar sind.

Als katalytische Komponenten können alle chemischen Elemente bzw. Trägerkomponenten für die Katalysatoren eingesetzt werden, die auch in der DE19843242.9 bzw. WO 00/15341 genannt sind, auf die hier ausdrücklich Bezug genommen wird, d.h. Li, Na, K, Mg, Ca, Sr, Ba, Y, La, Ti, Zr, V, Nb, Cr, Mn, Tc, Re, Fe, Ru, Os, Co, Rh, Ir, Ni, Pd, Pt, Cu, Ag, Au, Zn, Cd, Hg, B, Al, Ga, In, C, Si, Sn, Pb, N, P, As, Sb, Bi, S, Se, Te, F, Cl, Ce, Nd, bzw. als Träger die Oxide, Carbonate, Carbide, Nitride, Boride von Mg, Ca, Sr, Ba, La, Zr, Ce, Al, Si oder Gemische davon.

Die Stoffmengenanteile werden in gleicher Weise wie die Katalysatorkomponenten variiert, d.h. mittels Kreuzung und Mutation, und insoweit wird ebenfalls auf die WO 00/15341 Bezug genommen.

Die bevorzugte Zahl der Generationen liegt zwischen 5 und 50.

Die bevorzugte Zahl der Einzelkomponenten in der ersten Generation liegt zwischen 10 und 30.

Die bevorzugte Zahl der Einzelkomponenten in einem Mischmaterial der ersten Generation liegt zwischen 3 und 10 .

Es wurde weiterhin gefunden, dass es vorteilhaft ist, bei der Bestimmung der Leistungsparameter der neustrukturierten Materialzusammensetzungen der nächsten Generationen die Zusammensetzung des Gasstroms, die auf die Katalysatormasse bezogene Raumgeschwindigkeit des Gases und/oder die Temperatur zu variieren.

Besonders vorteilhaft ist es, wenn bei der Bestimmung der Leistungsparameter der neustrukturierten Materialzusammensetzungen der nächsten Generationen die Zusammensetzung des Gasstroms, die auf die Katalysatormasse bezogene Raumgeschwindigkeit des Gases und die Temperatur nach Prinzipien der Mutation und Kreuzung variiert werden.

Wie oben ausgeführt, werden die evolutionären Strategien, wie Kreuzung und Mutation, in der praktischen Durchführung mit numerischen Zufallsgeneratoren mit Gleichverteilung - im Unterschied zu solchen Zufallsgeneratoren mit logarithmischer Normalverteilung, Weibull-Verteilung, Candy-Verteilung usw. - realisiert, obwohl auch Ziehungen oder Würfeln gleichgestellte stochastische Verfahren darstellen. Bei den numerischen Zufallsgeneratoren werden vorteilhaft die Programmcodes G05CAF, G05DYF, G05DZF oder G05CCF der NAG Library (NAG FORTRAN Workstation Library, NAG Group Ltd., 1986) eines numerischen Zufallsgenerators eingesetzt.

Es können auch Zufallsgeneratoren verwendet werden,die frei im Internet verfügbar sind oder solche, wie "Numerical Recipes in FORTRAN, PASCAL oder C " Cambridge University Press, oder IMSL Libraries des FORTRAN compilers DIGITAL visual Fortran Professional Edition, die kommerziell als Software erhältlich sind.

Unter Einsatz derartiger Verfahren können somit z.B. mehrere Katalysatorkomponenten ausgewählt werden und deren entsprechende molare Stoffmengenanteile zwischen den zuvor ausgewählten Katalysatorkomponenten vertauscht werden (Kreuzung), Dadurch kann auch durch Mengenanteile, die von einem endlichen Wert auf Null oder von Null auf einen endlichen Wert geändert werden, ein Austausch der einzelnen Katalysatorkomponenten selbst mittels Kreuzung bewirkt werden, wodurch insgesamt eine neue Zusammensetzung des Katalysators der neuen Generation erhalten wird. Es können aber auch die z.B. mittels Zufallsgenerator ausgewählten Katalysatorkomponenten durch Multiplikation mit Faktoren, die aus der Menge der reellen Zahlen zwischen 0 und 10000 entweder zufällig bestimmt oder freiwählbar festgelegt werden, verringert oder vergrößert werden (Mutation), so daß der neue Katalysator der nächsten Katalysatorgeneration zwar dieselben Komponenten enthält, diese jedoch in anderer Konzentration vorliegen und damit auch die Verhältnisse der Komponenten untereinander verändert sein können.

Die Erfindung soll nachstehend durch ein Beispiel näher erläutert werden. In der dazugehörigen Zeichnung zeigen

Fig. 1 : Säulendiagramm mit Propylenausbeuten der jeweils 10 besten Katalysatoren einer Generation in Abhängigkeit und deren Zunahme innerhalb von 4 Generationen

Fig. 2 Schematische Darstellung der Kreuzung und Mutation.

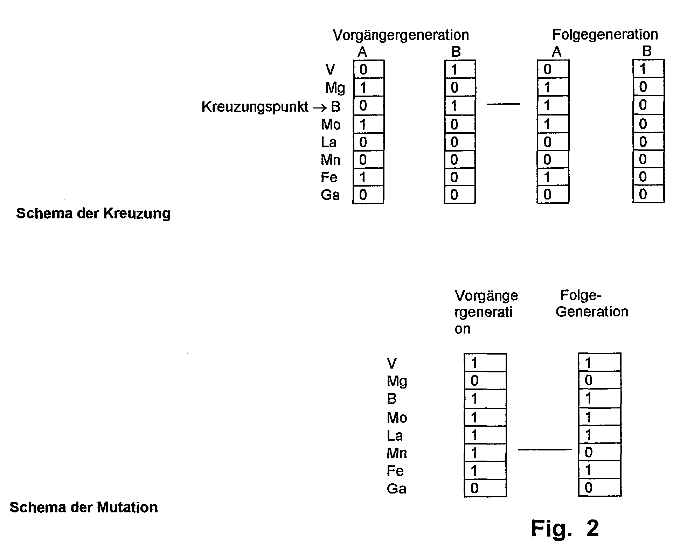

Unter Bezug auf Fig. 2 ist darauf zu verweisen, daß die jeweils links aufgeführten Primärkomponenten die bei der Erzeugung der katalytischen Materialien eingesetzten Elemente sind; der Index 1 bedeutet, dass diese Komponente im Katalysator enthalten ist, während Index 0 das Fehlen dieser Komponente beschreibt.

**Beispiel**

Es wurden Katalysatoren mit dem Ziel präpariert und getestet, Propan zu Propylen durch Oxidation mit Sauerstoff herzustellen und die entstehenden Oxide CO und $CO_2$ zu minimieren. Der Ablauf des Verfahrens umfaßte die folgenden Schritte und führte zu den jeweils genannten Ergebnissen.

**Experimentelle Durchführung**

Die Ausgangsverbindungen, die die Primärkomponenten der Mischkatalysatoren enthielten wurden zunächst in Wasser gelöst bzw. suspendiert und mit $\alpha$-$Al_2O_3$ (CONDEA, Partikeldurchmesser = 1.0 mm, $S_{BET}$ = 5 $m^2$/g), das als inertes Verdünnungsmaterial diente, gemischt. Das Volumen der Lösung/Dispersion das pro 1 g $Al_2O_3$ einsetzt wurde, betrug 10 ml. Die Mischung wurde 30 min bei 80°C gerührt. Das überschüssige Wasser wurde unter Rühren bei 100°C verdampft; der verbleibende Feststoff wurde bei 120°C 10 h getrocknet und bei 600°C 3 h in Luft kalziniert. Die Ausgangsverbindungen waren: $NH_4VO_3$ (Merck, p.a.), $Mg(NO_3)_2 \cdot 4H_2O$ (Merck, p.a.), $H_3BO_3$ (Merck, p.a.), $(NH_4)_6Mo_7O_{24} \cdot 4H_2O$ (Riedel de Haën, p.a.), $La(NO_3)_2 \cdot 6H_2O$ (Merck, p.a.), $Mn(NO_3)_2 \cdot 4H_2O$ (Merck, p. a.), Fe $(NO_3)_3 \cdot 9H_2O$ (Fluka, p.a.), $Ga(NO_3)_2 \cdot 6H_2O$ (Alfa, 99.9%).

Die Bestimmung der Leistungsparameter der Katalysatoren fand in U-Rohrreaktoren ($\varnothing_{int}$ = 6 mm) aus Quarz statt, die parallel betrieben wurden. Zur Minimierung der Temperaturgradienten befanden sich die Reaktoren in einer Sandwirbelschicht. Die Reaktionstemperatur betrug 500°C in allen Experimenten. Die Reaktionsgasmischung bestand aus Propan, Sauerstoff und Stickstoff ($C_3H_8$/$O_2$/$N_2$ = 3/1/6). 0.3 g Katalysator wurden eingesetzt; Der Gesamtvolumenstrom wurde im Bereich von 10 bis 150 ml/min (STP) variiert. Für die Analyse der Reaktionsgase wurde On-line-Gaschromatographie verwendet.

**Ergebnisse**

*1. Schritt: Erzeugung der 1. Generation katalytischer Materialien aus den festgelegten Primärkomponenten*

Die Zusammensetzungen unterschiedlicher katalytischer Materialien wurden nach dem Zufallsprinzip festgelegt (siehe Tabelle 1) indem jeweils 4 Primärkomponenten pro Material kombiniert wurden; die Gesamtzahl der Materialien der ersten Generation betrug 56. Diese Zahl wurde in allen weiteren Generationen beibehalten. Dies Zusammensetzungen der Katalysatoren der 1. Generation sind in Tabelle 1 zusammengefaßt.

*2. Schritt: Parallele Präparation and Testung katalytischer Materialien der 1. Generation*

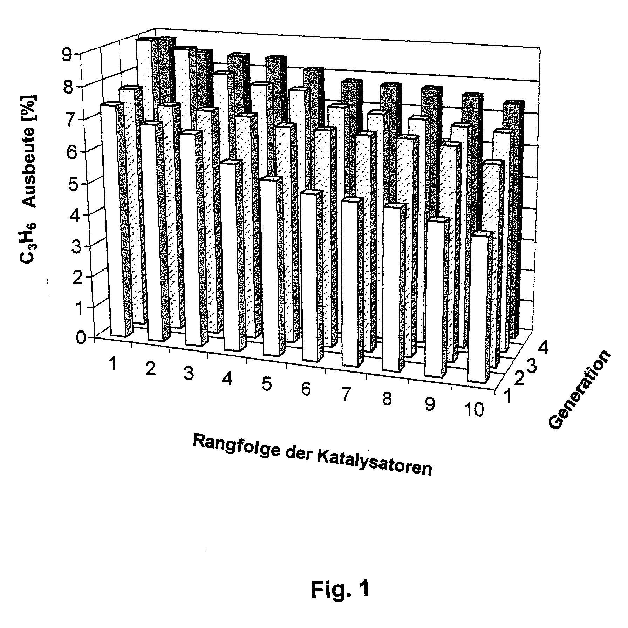

Die Materialien wurde nach der im Abschnitt Experimentelles beschriebenen Prozedur hergestellt und parallel getestet. Die Propylenausbeuten, die mit den Katalysatoren der 1. Generation erhalten wurden sind in Fig. 1 dargestellt.

*3. Schritt: Erzeugung der 2. Generation basierend auf den Ergebnissen der Testung der ersten Generation von Katalysatoren*

Zunächst wurden 37 Mischkatalysatoren der 2. Generation durch Kreuzung erzeugt. Dazu wurden jeweils 2 Mischoxidkatalystoren aus der 1. Generation ausgewählt wurden, wobei einer der beiden Katalysatoren (Katalysator A) per Zufall ausgewählt wurde, während die Auswahl des anderen (Katalysator B) mit einer Wahrscheinlichkeit $W_i$ erfolge, die durch den katalytischen Leistungsparameter dieses Katalysators gemäß Vorschrift

$$W_i = \frac{\left(\sum\limits_{j=1}^{n} j\right) - i}{\left(\sum\limits_{j=1}^{n} j\right)}$$

bestimmt ist. *i* bzw. *j* bezeichnen die Rangfolge der nach ihrer abnehmenden katalytischen Leistung geordneten Katalysatoren einer Generation, (dargestellt für die 10 leistungsstärksten Katalysatoren in Tabelle 3, erste Spalte) und n ist die Gesamtzahl der Katalysatoren einer Generation, die in diesem Beispiel 56 beträgt. Anschließend wurde aus den beiden ausgewählten Mischkatalysatoren A und B eine Primärkomponente nach dem Zufallsprinzip ausgewählt, die nur in einem der beiden Katalysatoren enthalten ist. Diese wurde jeweils dem Katalysator, der diese Komponente ursprünglich nicht enthielt, zugefügt und in dem Katalysator der diese ursprünglich enthielt, entfernt. In dem in Fig. 2 dargestellten Fall der Kreuzung betrifft dies die Primärkomponente Bor.

Darüber hinaus wurden 19 Katalysatoren der 2. Katalysatorgeneration durch Mutation erzeugt. Dazu wurde ein Mischkatalysator willkürlich aus einer Katalysatorgeneration ausgewählt und nach dem Zufallsprinzip eine Primärkomponente, die in dem Katalysator enthalten ist, herausgenommen bzw. eine Komponente die bislang nicht in diesem Katalysator enthalten war, hinzugefügt. In dem in Abb. 2 dargestellten Fall der Mutation betrifft dies die Primärkomponente Mangan.

*Folgeschritte: Wiederholung des 2. und 3. Schrittes für die kommenden Generationen*

Durch Wiederholung des Schrittes 2 und 3 wurden insgesamt 4 Katalysatorgenerationen getestet, die die Testung von insgesamt 224 katalytischen Materialien einschlossen. Die Propylen-Ausbeuten der jeweils 10 besten Katalysatoren einer Generation ist in Abbildung 2 dargestellt. Die Zusammensetzungen der katalytischen Materialien der 4. Generation sind in Tabelle 2 dokumentiert.

Die meisten Mischkatalysatoren, die gute Ausbeuten liefern, bestehen aus V, Mg, Mo, Ga or V, Mg, Ga. Abbildung 2 zeigt, daß von Generation zu Generation eine reproduzierbare Zunahme der Propylenausbeute des jeweils leistungsstärksten Katalysators der Generation erzielt wird. Folgende Zusammensetzungen führten zu den besten $C_3H_6$-Ausbeuten: $V_{0.25}Mg_{0.52}Mo_{0.12}Ga_{0.11}O_x$. (1. Generation), $V_{0.47}Mo_{0.05}Mn_{0.27}Ga_{0.21}O_x$. (2. Generation), $V_{0.22}Mg_{0.47}Mo_{0.11}Ga_{0.20}O_x$ (3. Generation), $V_{0.27}Mg_{0.37}Mo_{0.12}Fe_{0.13}Ga_{0.11}O_x$. (4. Generation). Die höchste $C_3H_6$-Ausbeute betrug 9.0 % (Selektivität = 57.4 %).

Bei den Zusammensetzungen der 4. Generation wird deutlich, dass selbst nach der 4. Generationen noch alle Primärkomponenten in der Generation vertreten sind, wenn auch die Präsenz von Komponenten, die in den ersten Generationen zu keiner signifikanten Propylenausbeute führten, gering ist. Dies ist auf die im Patentanspruch 1 beschriebenen Auswahlprinzipien für die Neustrukturierung der Katalysatoren zurückzuführen, die eine höhere Zielgenauigkeit des Optimierprozesses sichern als sie bei einer rein leistungsorientierten Katalysatorauswahl erreicht wird. So wurde im Vergleich zu der in der Offenlegungsschrift 198 43 242.9-41 (11.09. 1998) "Verfahren zur Herstellung aktiver und/oder selektiver Feststoff-Katalysatoren aus anorganischen und metallorganischen Feststoffen oder Gemischen davon" (Autoren Baerns M., Buyevskaya O., Claus P., Rodemerck U., Wolf D.) beanspruchten Methode mit der oben beschrieben Verfahrensweise beider Optimierung eine höhere Katalysatorleistung erreicht.

Tabelle 1

| Zusammensetzung katalytischer Materialien der 1. Generation | | | | | | | | |
|---|---|---|---|---|---|---|---|---|
| Kat.-Nr. | Gehalt / atomarer Anteil. | | | | | | | |
| | V | Mg | B | Mo | La | Mn | Fe | Ga |
| 1 | 0.24 | | | | 0.33 | | 0.15 | 0.28 |
| 2 | | 0.42 | | 0.11 | | 0.20 | 0.28 | |
| 3 | | 0.41 | 0.31 | | | | 0.05 | 0.24 |
| 4 | 0.47 | | 0.14 | | 0.27 | | | 0.12 |
| 5 | | | 0.42 | 0.29 | | 0.23 | | 0.06 |

Tabelle 1   (fortgesetzt)

| Zusammensetzung katalytischer Materialien der 1. Generation | | | | | | | | |
|---|---|---|---|---|---|---|---|---|
| Kat.-Nr. | Gehalt / atomarer Anteil. | | | | | | | |
| | V | Mg | B | Mo | La | Mn | Fe | Ga |
| 6 | | 0.36 | 0.10 | | | 0.41 | 0.13 | |
| 7 | | | | 0.32 | 0.20 | 0.26 | 0.22 | |
| 8 | | 0.21 | | 0.15 | | | 0.33 | 0.32 |
| 9 | 0.16 | | | | 0.27 | 0.10 | | 0.46 |
| 10 | | 0.30 | 0.28 | 0.13 | | | 0.28 | |
| 11 | | | 0.27 | | | 0.45 | 0.06 | 0.22 |
| 12 | | | | 0.17 | 0.14 | 0.56 | 0.13 | |
| 13 | | 0.34 | | | 0.19 | 0.16 | | 0.30 |
| 14 | | 0.36 | 0.08 | | 0.25 | | 0.32 | |
| 15 | 0.44 | | | 0.11 | | 0.26 | | 0.19 |
| 16 | 0.05 | 0.30 | | | 0.41 | | | 0.24 |
| 17 | 0.10 | 0.05 | 0.44 | | | 0.41 | | |
| 18 | 0.42 | 0.40 | | | | | 0.04 | 0.14 |
| 19 | | 0.02 | | | 0.51 | 0.25 | 0.22 | |
| 20 | 0.25 | 0.52 | | 0.12 | | | | 0.11 |
| 21 | | 0.33 | | 0.31 | 0.20 | | 0.15 | |
| 22 | 0.002 | | 0.37 | | | | 0.18 | 0.45 |
| 23 | 0.08 | | | 0.49 | 0.40 | | 0.04 | |
| 24 | | 0.13 | | 0.43 | 0.14 | | | 0.29 |
| 25 | | 0.39 | | | 0.46 | | 0.04 | 0.12 |
| 26 | | 0.05 | | 0.19 | | 0.53 | 0.22 | |
| 27 | | 0.29 | | 0.24 | 0.33 | | | 0.13 |
| 28 | 0.04 | | 0.46 | 0.25 | 0.26 | | | |
| 29 | 0.05 | | | | 0.26 | 0.29 | | 0.3 |
| 30 | | | 0.32 | | | 0.09 | 0.42 | 0.18 |
| 31 | 0.005 | | | 0.42 | | | 0.17 | 0.41 |
| 32 | | | 0.42 | 0.09 | | 0.02 | | 0.47 |
| 33 | 0.27 | 0.35 | | 0.05 | 0.34 | | | |
| 34 | 0.47 | | 0.15 | | | | 0.35 | 0.03 |
| 35 | | 0.31 | | 0.24 | 0.14 | | 0.31 | |
| 36 | 0.22 | | 0.38 | 0.13 | | 0.27 | | |
| 37 | | | 0.05 | 0.32 | 0.02 | | 0.61 | |
| 38 | 0.24 | | | | | 0.26 | | 0.27 |
| 39 | | 0.05 | | 0.45 | | 0.12 | 0.39 | |
| 40 | 0.26 | | | | 0.07 | | 0.59 | 0.08 |
| 41 | | 0.11 | 0.12 | | 0.09 | | | 0.68 |
| 42 | 0.28 | | | 0.23 | 0.3 | 0.19 | | |
| 43 | 0.05 | | 0.24 | 0.38 | | | | 0.32 |
| 44 | | | 0.41 | | 0.24 | | 0.24 | 0.12 |
| 45 | | 0.2 | | 0.24 | | 0.34 | | 0.21 |
| 46 | 0.44 | | 0.28 | | 0.03 | | | 0.24 |
| 47 | 0.25 | 0.35 | | 0.27 | | | 0.13 | |
| 48 | 0.36 | | | | | 0.3 | 0.25 | 0.09 |
| 49 | | 0.7 | 0.1 | | | 0.12 | | 0.08 |
| 50 | | | 0.22 | | 0.13 | 0.32 | | 0.33 |
| 51 | 0.27 | 0.34 | | 0.21 | | | 0.18 | |
| 52 | 0.13 | | | | 0.07 | | 0.43 | 0.37 |

Tabelle 1   (fortgesetzt)

| Zusammensetzung katalytischer Materialien der 1. Generation | | | | | | | | |
|---|---|---|---|---|---|---|---|---|
| Kat.-Nr. | Gehalt / atomarer Anteil. | | | | | | | |
| | V | Mg | B | Mo | La | Mn | Fe | Ga |
| 53 | | | 0.23 | 0.21 | 0.24 | | 0.31 | |
| 54 | 0.18 | 0.2 | | | | | 0.32 | 0.3 |
| 55 | | | 0.31 | | | 0.28 | | 0.17 |
| 56 | | 0.26 | | | 0.34 | 0.004 | 0.39 | |

Tabelle 2

| Zusammensetzung der katalytischen Materialien der 4. Generation | | | | | | | | |
|---|---|---|---|---|---|---|---|---|
| Kat. No | Gehalt / Atomarer Anteil | | | | | | | |
| | V | Mg | B | Mo | La | Mn | Fe | Ga |
| 1 | 0.30 | | | 0.34 | | 0.36 | | |
| 2 | 0.36 | 0.22 | | 0.18 | | 0.09 | | 0.15 |
| 3 | 0.20 | 0.28 | | 0.09 | | | 0.10 | 0.32 |
| 4 | 0.21 | 0.53 | | 0.16 | | 0.10 | | |
| 5 | 0.22 | 0.47 | | 0.21 | | | | 0.10 |
| 6 | 0.27 | 0.55 | | 0.09 | | | | 0.12 |
| 7 | 0.71 | | | 0.09 | | 0.20 | | |
| 8 | 0.27 | 0.37 | | 0.12 | | | 0.13 | 0.11 |
| 9 | 0.20 | 0.28 | | 0.09 | | 0.26 | 0.10 | 0.06 |
| 10 | 0.54 | | | 0.14 | | 0.32 | | |
| 11 | 0.29 | 0.28 | | | 0.31 | | 0.03 | 0.10 |
| 12 | 0.18 | 0.25 | | 0.08 | | | 0.09 | 0.40 |
| 13 | 0.44 | | | 0.25 | | 0.13 | | 0.20 |
| 14 | 0.18 | 0.26 | | 0.19 | | | 0.10 | 0.27 |
| 15 | 0.51 | | | 0.13 | | 0.15 | | 0.21 |
| 16 | 0.52 | | | 0.24 | | | | 0.23 |
| 17 | | 0.51 | | 0.20 | | 0.29 | | |
| 18 | 0.44 | | 0.17 | | | 0.29 | 0.04 | 0.06 |
| 19 | 0.28 | | | 0.07 | | 0.07 | 0.46 | 0.12 |
| 20 | 0.13 | 0.19 | | 0.14 | | | 0.14 | 0.39 |
| 21 | 0.16 | 0.21 | | | | | 0.11 | 0.52 |
| 22 | | | 0.34 | | | 0.55 | | 0.11 |
| 23 | 0.40 | | | 0.20 | | 0.23 | | 0.17 |
| 24 | 0.21 | 0.26 | | 0.07 | | | 0.14 | 0.33 |
| 25 | 0.23 | 0.22 | | 0.45 | | | 0.02 | 0.08 |
| 26 | 0.41 | 0.25 | | 0.10 | | 0.05 | | 0.18 |
| 27 | 0.19 | 0.39 | | 0.09 | | | | 0.33 |
| 28 | 0.40 | | | 0.05 | | 0.23 | | 0.33 |
| 29 | 0.18 | 0.78 | | | | | | 0.04 |
| 30 | 0.42 | 0.44 | | 0.10 | | | | 0.05 |
| 31 | | 0.77 | | 0.23 | | | | |
| 32 | 0.47 | | | 0.06 | | 0.27 | | 0.20 |
| 33 | 0.64 | 0.30 | | | | | 0.06 | |
| 34 | 0.27 | 0.34 | | 0.09 | | | 0.19 | 0.11 |
| 35 | 0.54 | | | 0.14 | | 0.32 | | |
| 36 | 0.50 | | | | | 0.29 | | 0.21 |

Tabelle 2   (fortgesetzt)

| Kat. No | Gehalt / Atomarer Anteil | | | | | | | |
|---|---|---|---|---|---|---|---|---|
| | V | Mg | B | Mo | La | Mn | Fe | Ga |
| 37 | 0.45 | 0.14 | | 0.11 | | 0.11 | | 0.19 |
| 38 | 0.19 | 0.48 | | 0.15 | | | 0.12 | 0.06 |
| 39 | | 0.40 | | 0.16 | | 0.16 | | 0.28 |
| 40 | 0.20 | 0.43 | | 0.10 | | | 0.22 | 0.05 |
| 41 | 0.29 | 0.38 | | 0.23 | | | | 0.10 |
| 42 | | | | | 0.15 | | | 0.85 |
| 43 | 0.29 | 0.31 | | 0.14 | | | | 0.26 |
| 44 | 0.18 | 0.37 | | 0.08 | | | 0.33 | 0.04 |
| 45 | 0.47 | | | 0.05 | | 0.28 | | 0.20 |
| 46 | 0.28 | 0.59 | | 0.07 | | | | 0.06 |
| 47 | 0.16 | 0.20 | | 0.12 | 0.36 | | 0.11 | 0.05 |
| 48 | 0.30 | 0.39 | | 0.24 | | | | 0.07 |
| 49 | 0.20 | | | 0.15 | | | 0.65 | |
| 50 | 0.46 | 0.49 | | | | | | 0.05 |
| 51 | 0.13 | 0.67 | | 0.20 | | | | |
| 52 | 0.09 | 0.21 | 0.39 | | | | | 0.32 |
| 53 | 0.41 | 0.25 | | 0.10 | | 0.05 | | 0.18 |
| 54 | 0.34 | 0.48 | | | | | 0.17 | |
| 55 | 0.14 | 0.20 | | 0.15 | | 0.20 | 0.08 | 0.42 |
| 56 | 0.28 | 0.57 | | 0.13 | | | | |

**Tabelle 3**. Zusammensetzung der 10 besten katalytischen Materialien, die die jeweils höchste Propylenausbeute einer Generation ergeben

| i bzw. j | Generation 1 | Generation 2 | Generation 3 | Generation 4 |
|---|---|---|---|---|
| 1 | $V_{0,25}Mg_{0,52}Mo_{0,12}Ga_{0,11}O_x$ | $V_{0,47}Mo_{0,05}Mn_{0,27}Ga_{0,2}O_x$ | $V_{0,22}Mg_{0,47}Mo_{0,11}Ga_{0,2}O_x$ | $V_{0,27}Mg_{0,37}Mo_{0,12}Fe_{0,13}Ga_{0,1}O_x$ |
| 2 | $V_{0,44}Mo_{0,11}Mn_{0,26}Ga_{0,19}O_x$ | $V_{0,35}Mg_{0,33}Fe_{0,03}Ga_{0,28}O_x$ | $V_{0,3}Mg_{0,63}Ga_{0,07}O_x$ | $V_{0.29}Mg_{0.31}Mo_{0.14}Ga_{0.26}O_x$ |
| 3 | $V_{0,42}Mg_{0,4}Fe_{0,04}Ga_{0,14}O_x$ | $V_{0,39}Mo_{0,22}Mn_{0,23}Ga_{0,17}O_x$ | $V_{0,14}Mg_{0,2}Mo_{0,15}Fe_{0,08}Ga_{0,42}O_x$ | $V_{0.19}Mg_{0.39}Mo_{0.09}Ga_{0.33}O_x$ |
| 4 | $V_{0,27}Mg_{0,34}Mo_{0,21}Fe_{0,18}O_x$ | $Mg_{0,26}Mo_{0,31}Mn_{0,44}O_x$ | $V_{0,4}Mg_{0,42}Mo_{0,09}Ga_{0,09}O_x$ | $V_{0.35}Mg_{0.3}Mo_{0.2}Mn_{0,15}Ga_{0.08}O_x$ |
| 5 | $V_{0,36}Mn_{0,3}Fe_{0,25}Ga_{0,09}O_x$ | $V_{0,27}Mo_{0,19}Fe_{0,43}Ga_{0,11}O_x$ | $V_{0,39}Mg_{0,24}Mo_{0,1}Mn_{0,1}Ga_{0,17}O_x$ | $V_{0.41}Mg_{0.25}Mo_{0.1}Mn_{0,05}Ga_{018}O_x$ |
| 6 | $V_{0,18}Mg_{0,2}Fe_{0,32}Ga_{0,3}O_x$ | $V_{0,31}Mg_{0,39}Mo_{0,1}Fe_{0,21}O_x$ | $V_{0,24}Mg_{0,32}Mo_{0,19}Fe_{0,16}Ga_{0,08}O_x$ | $V_{0.42}Mg_{0.44}Mo_{0.1}Ga_{0.05}O_x$ |
| 7 | $V_{0,25}Mg_{0,35}Mo_{0,27}Fe_{0,13}O_x$ | $V_{0,3}Mg_{0,42}Mo_{0,13}Fe_{0,17}O_x$ | $V_{0,27}Mg_{0,38}Mo_{0,12}Fe_{0,14}Ga_{0,08}O_x$ | $V_{0.27}Mg_{0.34}Mo_{0.09}Fe_{0.19}Ga_{0.11}O_x$ |
| 8 | $B_{0,42}Mo_{0,09}Mn_{0,02}Ga_{0,47}O_x$ | $V_{0,24}La_{0,12}Ga_{0,65}O_x$ | $V_{0,53}Mg_{0,25}Fe_{0,05}Ga_{0,18}O_x$ | $V_{0.2}Mg_{0.28}Mo_{0.09}Fe_{0.1}Ga_{0.32}O_x$ |
| 9 | $V_{0,26}La_{0,07}Fe_{0,59}Ga_{0,08}O_x$ | $V_{0,52}Mo_{0,13}Mn_{0,13}Ga_{0,22}O_x$ | $V_{0,55}Mo_{0,06}Mn_{0,16}Ga_{0,23}O_x$ | $V_{0.47}Mg_{0.05}Mn_{0.28}Ga_{0.2}O_x$ |
| 10 | $V_{0,47}B_{0,15}Fe_{0,35}Ga_{0,03}O_x$ | $V_{0,27}Mg_{0,57}Mo_{0,13}Ga_{0,06}O_x$ | $V_{0,23}Mg_{0,59}Mo_{0,18}O_x$ | $V_{0.18}Mg_{0.26}Mo_{0.19}Fe_{0.1}Ga_{0.27}O_x$ |

EP 1 174 186 A2

**Patentansprüche**

1. Verfahren zur Herstellung und Auswahl neuer Katalysatoren nach einem evolutionären Verfahren durch Auswahl unterschiedlich zusammengesetzter Feststoffmaterialien und Neustrukturierung der ursprünglichen Katalysatoren und nachfolgender Katalysatorgenerationen mittels stochastischer Verfahren sowie Bestimmung der Leistungsparameter der jeweiligen Katalysatorgeneration und Auswahl der Mischkatalysatoren einer oder mehrerer Katalysatorgenerationen **dadurch gekennzeichnet,**
   **dass** die Neustrukturierung, wenn sie denn auf dem Prinzip der Kreuzung basiert, in der Weise erfolgt, dass ein Mischkatalysator willkürlich mittels eines numerischen Zufallsgenerators mit Gleichverteilung aus einer Generation von Katalysatoren ausgewählt wird und ein zweiter Mischkatalysator aus der selben Generation mit einer Wahrscheinlichkeit $W_i$ mittels eines oder mehrerer numerischer Zufallsgeneratoren mit Gleichverteilung ausgewählt wird, wobei $W_i$ durch die Vorschrift

$$W_i = \frac{\left( \sum_{j=1}^{n} j \right) - i}{\left( \sum_{j=1}^{n} j \right)}$$

   bestimmt ist, $i$ bzw. $j$ die Rangfolge der nach ihrer abnehmenden katalytischen Leistung geordneten Katalysatoren einer Generation bezeichnen und $n$ die Anzahl von Katalysatoren in einer Generation ist,
   und anschließend aus den beiden zu kreuzenden Mischkatalysatoren mindestens eine Einzelkomponente, die nur in einem der beiden Katalysatoren enthalten ist, nach dem Zufallsprinzip mittels eines numerischen Zufallsgenerators mit Gleichverteilung ausgewählt wird, und zwei neue Katalysatorzusammensetzungen der nächsten Generation so festgelegt werden, dass die ausgewählte Komponente nun dem Katalysator zugefügt wird, der diese Komponente in der vorangegangenen Generation nicht enthielt, während die Komponente in dem Katalysator, der diese ursprünglich enthielt, weggelassen wird,
   und
   **dass** die Neustrukturierung eines Katalysators der nächsten Generation, wenn sie denn auf dem Prinzip der Mutation basiert, in der Weise erfolgt,
   **dass** zunächst ein Mischkatalysator willkürlich mittels eines numerischen Zufallsgenerators mit Gleichverteilung aus einer Katalysatorgeneration ausgewählt wird, dann nach dem Zufallsprinzip mittels eines numerischen Zufallsgenerators mit Gleichverteilung eine Einzelkomponente ausgewählt wird und diese, wenn sie in dem Katalysator bereits enthalten ist, herausgenommen wird oder, wenn sie bislang nicht in diesem Katalysator enthalten war, hinzugefügt wird.

2. Verfahren nach Anspruch 1 **dadurch gekennzeichnet, dass** die bevorzugte Zahl der Generationen zwischen 5 und 50 liegt.

3. Verfahren nach Anspruch 1 **dadurch gekennzeichnet, dass** die bevorzugte Zahl der Einzelkomponenten in der ersten Generation zwischen 10 und 30 liegt.

4. Verfahren nach Anspruch 1 **dadurch gekennzeichnet, dass** die bevorzugte Zahl der Einzelkomponenten in einem Mischmaterial der ersten Generation zwischen 3 und 10 liegt.

5. Verfahren nach einem der Ansprüche 1 bis 4, **dadurch gekennzeichnet, daß** als numerische Zufallsgeneratoren die Programm-Codes G05DYF, G05DZF, G05CAF, G05CCF der NAG Library [NAG FORTRAN Workstation Library, NAG Group Ltd., 1986]) allein oder in Kombination miteinander ausgewählt und für die stochastischen Verfahren Mutation und Kreuzung eingesetzt werden.

6. Verfahren nach Anspruch 1 **dadurch gekennzeichnet, dass** bei der Bestimmung der Leistungsparameter der neustrukturierten Materialzusammensetzungen der nächsten Generationen die Zusammensetzung des Gasstroms variiert wird.

7. Verfahren nach Anspruch 1 **dadurch gekennzeichnet, dass** bei der Bestimmung der Leistungsparameter der neustrukturierten Materialzusammensetzungen der nächsten Generationen die auf die Katalysatormasse bezogene Raumgeschwindigkeit des Gases variiert wird.

8. Verfahren nach Anspruch 1 **dadurch gekennzeichnet, dass** bei der Bestimmung der Leistungsparameter der neustrukturierten Materialzusammensetzungen der nächsten Generationen die Temperatur variiert wird.

9. Verfahren nach Anspruch 1 **dadurch gekennzeichnet, dass** bei der Bestimmung der Leistungsparameter der neustrukturierten Materialzusammensetzungen der nächsten Generationen die Zusammensetzung des Gasstroms, die auf die Katalysatormasse bezogene Raumgeschwindigkeit des Gases und die Temperatur nach Prinzipien der Mutation und Kreuzung variiert werden.

Fig. 1

## Schema der Kreuzung

|  | Vorgängergeneration A | Vorgängergeneration B | Folgegeneration A | Folgegeneration B |
|---|---|---|---|---|
| V | 0 | 1 | 0 | 1 |
| Mg | 1 | 0 | 1 | 0 |
| Kreuzungspunkt → B | 0 | 1 | 1 | 0 |
| Mo | 1 | 0 | 1 | 0 |
| La | 0 | 0 | 0 | 0 |
| Mn | 0 | 0 | 0 | 0 |
| Fe | 1 | 0 | 1 | 0 |
| Ga | 0 | 0 | 0 | 0 |

## Schema der Mutation

|  | Vorgängergeneration | Folge-Generation |
|---|---|---|
| V | 1 | 1 |
| Mg | 0 | 0 |
| B | 1 | 1 |
| Mo | 1 | 1 |
| La | 1 | 1 |
| Mn | 1 | 0 |
| Fe | 1 | 1 |
| Ga | 0 | 0 |

Fig. 2